(19) Europäisches Patentamt
European Patent Office
Office européen des brevets

(11) **EP 3 059 829 B1**

(12) **EUROPEAN PATENT SPECIFICATION**

(45) Date of publication and mention
of the grant of the patent:
**22.11.2017 Bulletin 2017/47**

(51) Int Cl.:
*H02J 3/00* (2006.01)   *H02J 3/12* (2006.01)
*G05F 1/20* (2006.01)

(21) Application number: **15382062.6**

(22) Date of filing: **17.02.2015**

(54) **System and method for regulating energy in electrical installations**

SYSTEM UND VERFAHREN ZUR REGELUNG DER ENERGIE IN ELEKTRISCHEN ANLAGEN

SYSTÈME ET PROCÉDÉ DE RÉGULATION D'ÉNERGIE DANS DES INSTALLATIONS
ÉLECTRIQUES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**24.08.2016 Bulletin 2016/34**

(73) Proprietor: **Gestión e Innovación en Efficiencia
Energética ,
S.L.,
33203 Gijón (Asturias) (ES)**

(72) Inventors:
• **Collantes Bellido, Rafael
E-28822 Coslada - Madrid (ES)**
• **Domínguez Pino, Oscar
E-28850 Torrejon de Ardoz - Madrid (ES)**

(74) Representative: **ABG Patentes, S.L.
Avenida de Burgos, 16D
Edificio Euromor
28036 Madrid (ES)**

(56) References cited:
JP-A- 2005 292 948   US-A1- 2003 187 550
US-A1- 2010 085 004   US-A1- 2010 327 961

• **Gonzalo Martínez ET AL: "Reducción del
consumo eléctrico mediante la optimización de
tensión", Jornada sobre Eficacia y Eficiencia
Energética en Polígonos Industriales
Inteligentes, 29 May 2013 (2013-05-29), pages
1-24, XP055204301, Rivas Vaciamadrid, Spain
Retrieved from the Internet:
URL:http://www.climanoticias.com/wp-conten
t/uploads/2013/05/GonzaloMartinez_ESSA.pdf
[retrieved on 2015-07-23]**

## Description

Object of the Invention

The present invention relates to a system and method for regulating the voltage level in electric loads, minimizing energy consumption in an electrical installation.

Background of the Invention

The different electrical systems making up electrical installations generate energy consumption. There are technical specifications today that require greater energy consumption efficiency, such that said consumption is reduced.

To achieve an improvement in energy efficiency of the different types of installations, a system that allows managing the energy consumed in said installations by means of different systems, such as smart control, for example, is necessary.

Greater energy efficiency of electrical installations can be achieved by means of reducing the electric power circulating through them. There are different technological solutions for doing this.

Firstly, there are voltage reducers, which are systems that statically reduce the voltage of the electrical system regardless of the load curve of said system, thereby reducing energy consumption when the connected load is a resistive load. However, if there are other types of loads in the installation, the energy savings obtained through the voltage reducers is very scarce, even generating greater consumption as intense current peaks are generated in the electrical system to compensate for the excessive voltage drop experienced when the power grid supply voltage experiences drops.

Autotransformers which, combined with a system that reduces the voltage wave supplied by the power grid, form devices like the aforementioned system are also known. In this case, the autotransformer incorporates the capacity to reduce the supplied voltage wave, such that the autotransformer has a certain voltage control capacity. Nevertheless, the sizing of a system of this type is complicated, given that the power electronics associated with a system of this type is that which supports the entire system intensity. This technology additionally generates high harmonic distortion levels affecting correct electrical system operation.

Another system known in the state of the art that allows reducing energy consumption in electrical installations is transformers with cross-winding. This is a system that allows making use of the advantages obtained from crossing over the phases of a transformer, thereby improving the properties of the electric supply system, but the obtained voltage reduction is static and constant, so it has the same drawbacks as voltage reducers do.

Finally, flexible alternating current transmission systems (FACTS) are also known. These systems are used in large power grids to improve capacity in energy transmission grids and balance out the electric power among the different grid nodes. Nevertheless, they are complex and sophisticated devices and they are not intended for low voltage systems.

As has already been mentioned, system sizing and the system's capacity to respond to changes in installations is one of the biggest problems of systems of this type as regards managing energy consumption of electrical installations.

Document JP2005292948A discloses an energy saving device which helps minimizing the power consumption of a load connected to an electricity distribution system by means of voltage regulating means. The energy saving device that is installed in an electricity distribution system of a customer and minimizes a power consumption of a load connected to it comprises a power measurement means that measures the power of the load side from the installation point, and a voltage regulating means that regulates an output voltage so that the power readout measured by the power measurement means is minimized. Furthermore this energy saving device is equipped with a limiter that limits a voltage value within a predetermined range by setting upper and lower limits to the voltage value outputted from the voltage regulating means. Document US2003187550A1 relates to a power adjustment apparatus including a controller, sensors distributed within a power grid and a device configured to increase an associated output electrical parameter when reduction of power consumption is determined to be achieved.

Document US2010085004A1 discloses a system and process which continuously determine an applied armature voltage supplied to a polyphaser synchronous machine for which a maximum mechanical load is characterized by a pull-out torque.

Document US2010327961A1 relates to a semiconductor integrated circuit device which detects an energy-minimizing power supply voltage which minimizes a change in the energy consumed by the target circuit upon a change in the power supply voltage.

The published paper *"Reduction of electric consumption by means of voltage optimization"*, by Gonzalo Martinez, discloses several technical problems related with electrical systems and devices which allow an optimization of the voltage of said systems by means of balancing phase-voltages.

The present invention solves the aforementioned problems given that it comprises a system that manages part of the energy of the system, such that the necessary power of the components of said system is around 5%-10% of the power of the installation. This means that energy consumption of the device itself is very low, thereby improving efficiency of the installation and reducing its economic operating cost.

In parallel, the device of the present invention has the capacity to continuously manage the active power of the electrical installation, such that it adapts to the different load curves of the installation during operation, such that it allows the electrical system to work at its optimal active power at all times, thereby improving energy efficiency of the electrical system.

Description of the Invention

The present invention proposes a solution to the aforementioned problems by means of a device for improving energy efficiency in an electrical installation according to claim 1 and a method for regulating a supply voltage in an electrical installation according to claim 9. Preferred embodiments of the invention are defined in the dependent claims.

A first example provides a *device for improving energy efficiency in an electrical installation, comprising:*

- *at least one inlet adapted for receiving a power grid supply voltage U,*
- *at least one voltage U regulating element, and*
- *at least one load voltage $U_Z$ supply outlet feeding at least one electric load of the electrical installation,*

*wherein the at least one regulating element is configured for changing the voltage U value according to the optimal active power consumption value of the at least one electric load, obtaining a regulated load voltage $U_Z$ corresponding to the voltage level that optimizes active power consumption of the at least one electric load, said regulated load voltage $U_Z$ being comprised in a limit voltage range corresponding to the range of operating voltage values of said at least one electric load.*

Throughout this document, it will be understood that the optimal active power consumption value is the value at which an electric load is capable of working correctly, without being damaged, with minimum energy consumption necessary for said operation. Active power is the power actually consumed by the loads of an installation, and therefore it determines consumption of the installation. The optimal active power consumption value of an electric load allows minimizing said consumption. Therefore, the optimal active power consumption value of an electric load is determined by the optimal regulated load voltage $U_Z$ level, i.e., the voltage level that optimizes active power consumption of said electric load.

The regulating element of the device according to the first inventive aspect allows obtaining regulated load voltage $U_Z$ with which an electric load is fed, wherein said regulated load voltage $U_Z$ value is that which corresponds to the optimal voltage level that provides the optimal active power consumption value of each electric load of the circuit by means of the following equation:

$$P_{optimal\ active} = U_Z \cdot I_Z \cdot \cos\varphi$$

The regulated load voltage $U_Z$ comes from the power grid supply voltage U which is modified after being treated by the regulating element, the value thereof changing either by means of an increase or else by means of a reduction according to the operating conditions of the electrical installation.

The regulated load voltage $U_Z$ value supplied to electric loads of the installation is limited by a range of values that allows correct operation of said loads. This limit is determined by different law establishing the minimum voltage value that must be supplied to a specific electric load, and by the maximum value established by said electric load, such that it is not damaged by overvoltage during operation.

The values comprised in this range are referred to as the operating voltage values of each of the electric loads.

Advantageously, the regulated load voltage $U_Z$ obtained after the voltage passes through a regulating element like the one comprised by a device according to the first inventive aspect is an effectively optimized voltage value, such that the necessary active power value is adjusted, which allows reducing energy consumption and therefore cost.

In a particular embodiment, the voltage U regulating element is configured for continuously obtaining the regulated load voltage $U_Z$ value corresponding to the voltage level that optimizes active power consumption of the at least one electric load during operation of the electrical installation.

In electrical installations the optimal active power consumption value is not constant, but rather changes according to the number of loads connected to said installation and the environmental conditions of this installation. Active power consumption also changes according to the operating point of the equipment connected to the installation, i.e., according to their working cycle, there being consumption differences in start-up and during normal operation.

Continuous adjustment of the regulated load voltage $U_Z$ allows determining the optimal voltage value for which the electrical installation consumes minimum active power at all times. Consumption is thereby minimal at all times and energy savings are maximal.

In a particular embodiment, the voltage U regulating element is configured for obtaining the regulated load voltage $U_Z$ value corresponding to the voltage level that optimizes active power consumption of the at least one electric load during operation of the electrical installation when there is a relevant variation in the value of the connected loads in the electrical installation.

This allows adjusting the regulated load voltage $U_Z$ only at those times when consumption of the installation changes significantly, such that energy saving is obtained without performing a continuous evaluation of the state of consumption of the electrical installation.

In a particular embodiment, the voltage U regulating element comprises modifying means and selection means for modifying and selecting power grid voltage U, wherein said selection means are adapted for:

- shunting a voltage $U_D$, corresponding to a decimal D of the regulated load voltage $U_Z$,

$$U_D = D \cdot U_Z \quad ,$$

$D \in [0,1]$ and the modifying means are adapted for:
- changing the voltage $U_D$ value according to a factor R depending on the optimal active power consumption value of the at least one electric load, obtaining a modified voltage $U'$, wherein:

$$U' = R \cdot U_D \quad ,$$

the regulated load voltage $U_Z$ being:

$$U_Z = U \mp U'$$

The selection means allow separating a percentage of the voltage value feeding the load, such that said voltage percentage, or voltage $U_D$, is treated by the modifying means. If the selected voltage percentage is nil, $U_D = 0$.

The voltage $U_D$ value is changed by the modifying means, and the voltage used to feed the load is the regulated load voltage $U_Z$, this being a voltage value that is greater or less than the supply voltage U value.

Advantageously, the selection means allow shunting the suitable voltage percentage for treatment thereof, and the modifying means allow adjusting said shunt voltage percentage to feed the electric loads with a voltage level that optimizes the active power consumption thereof.

In a particular embodiment, the regulated load voltage $U_Z$ value is Uz as claimed in claim 3. The regulated load voltage $U_Z$ value is such that the supply voltage U value increases or decreases according to the parameters D and R defined in the regulating element.

This allows obtaining the supply voltage value of the load corresponding to the optimal active power consumption thereof.

In a particular embodiment, the device comprises processing means adapted for:

- determining the voltage that optimizes active power consumption of the at least one electric load, and
- acting on the modifying means and selection means.

By means of the processing means, consumption of the electrical installation is analyzed and the electric loads connected to said installation, together with the energy consumption thereof, are determined. The processing means also act, for example, on parameters D and R of the selection means and modifying means.

The processing means advantageously allow better operation of the modifying means and selection means in order to obtain the voltage value corresponding to the minimum active power consumption of the installation.

In a particular embodiment, the modifying means are configured for changing the voltage $U_D$ value according to the evaluation of the increase in consumed active power P with respect to regulated load voltage $U_Z$, such that:

- if power P increases with respect to regulated load voltage $U_Z$, the regulated voltage $U_Z$ value is decreased by the modifying means, or
- if power P decreases with respect to regulated load voltage $U_Z$, the regulated load voltage $U_Z$ value is increased by the modifying means.

Advantageously, this evaluation of the increase allows adjusting the regulated load voltage $U_Z$ value required by electric loads for the correct operation and optimal consumption thereof.

In a particular embodiment, evaluation of the increase in consumed active power P with respect to regulated load voltage $U_Z$ is performed by means of evaluating the derivative $\frac{dP}{dU_Z}$.

The evaluation of the increase by means of the derivative of one of the variables with respect to the other allows a more robust evaluation of the voltage required by the electric loads.

In a particular embodiment, the processing means are configured for determining the evaluation of the increase in consumed active power P with respect to load voltage $U_Z$.

This advantageously allows the processing means to perform said evaluation, subsequently supplying the results to the selection means and modifying means, such that both means act on the voltage $U_D$ according to said results.

In a particular embodiment, the modifying means comprise a transformer.

The use of a transformer as modifying means allows changing the voltage $U_D$ value and adjusting said value to the optimal active power consumption value. In this case, the parameter R is the transformation ratio of said transformer.

In a particular embodiment, the selection means comprise an autotransformer with the corresponding power electronics.

In a particular embodiment, the selection means are variable autotransformers, transformers with in-load switchable taps or electronic compensators, arranged in series.

The use of autotransformers associated with their power electronics as selection means allows selecting the voltage percentage suitable for treatment in the modifying means, adjustment of the supply voltage to electric loads thereby being suitable.

In a particular embodiment, the device comprises a bypass system that allows the supply voltage U to avoid being regulated by means of the at least one regulating element, such that the regulated load voltage $U_Z$ supplied to the at least one load is the power grid supply voltage U.

Advantageously, in the event of a malfunction of the regulating element, this allows electric loads connected to the installation to receive an energy supply directly from the power grid supply.

Additionally, the bypass system allows rapidly and reliably quantifying the savings produced by the device given that said bypass system allows using the electrical installation with the device while it is operating, but also the operation of the installation, preventing the connection of the device with the installation.

In a particular embodiment, the value of the decimal D is zero, regulated load voltage $U_Z$ value being the power grid supply voltage U value.

This allows electric loads to receive power grid supply voltage U as there is no shunt voltage $U_D$, both if the regulating element is not operative and if the power grid supply voltage U value is the optimal value which allows optimal active power consumption.

A second inventive aspect provides a *method for regulating a supply voltage U in an electrical installation, characterized in that it comprises a device according to the first inventive aspect, said method comprising the following steps:*

- *measuring the consumed active power P of the at least one load, and the load voltage $U_Z$,*
- *evaluating the increase in consumed active power P with respect to the supplied voltage $U_Z$,*
- *regulating, by means of the regulating element, the supply voltage U value by decreasing the load voltage $U_Z$ value if power P increases with respect to supplied voltage $U_Z$, and by increasing the load voltage $U_Z$ value if power P decreases with respect to load voltage $U_Z$, all this such that the load voltage $U_Z$ value corresponds to the voltage level that optimizes the consumed active power P value of the at least one load.*

The method implemented in an electrical installation comprising a device according to the first inventive aspect advantageously allows regulation of the supply voltage U according to the consumption pattern detected in the installation, such that said regulation provides at all times the optimal voltage value corresponding to the optimal active power consumption value of each electric load connected to the installation.

In a particular embodiment, the step of evaluating the increase in consumed active power P with respect to load voltage $U_Z$ comprises:

- evaluating the derivative $\dfrac{dP}{dU_Z}$

- decreasing the load voltage $U_Z$ value if the value of said derivative $\dfrac{dP}{dU_Z}$ is greater than zero, or

- increasing the load voltage $U_Z$ value if the value of said derivative $\dfrac{dP}{dU_Z}$ is less than zero, or

- maintaining the load voltage $U_Z$ value if the value of said derivative $\dfrac{dP}{dU_Z}$ is equal to zero.

This allows a more robust evaluation of the increase in voltage required by the electric loads.

In a particular embodiment, the processing means perform the step of evaluating the increase in consumed active power P with respect to load voltage $U_Z$.

The evaluation of the increase through the processing means advantageously allows better regulation of the voltage $U_D$ to obtain the voltage value corresponding to the minimum active power consumption of the installation.

All the features and/or steps of the methods described in this specification (including the claims, description and drawings) can be combined in any combination, with the exception of combinations of such mutually exclusive features.

Description of the Drawings

The foregoing and other features and advantages of the invention will be more clearly understood based on the following detailed description of a preferred embodiment given only by way of illustrative and non-limiting example in reference to the attached drawings.

Figure 1 shows a diagram of a device according to an embodiment of the invention.
Figure 2 shows a diagram of a device according to another embodiment of the invention.
Figure 3 shows a P-U curve of an electrical installation according to a particular embodiment for connecting electric loads.
Figure 4 shows a P-U curve of an electrical installation according to another particular embodiment for connecting electric loads, based on a combination of said loads.
Figure 5 shows a flowchart of the operation of a device according to an embodiment of the invention.
Figure 6 shows a comparison of the supply voltage U and regulated load voltage $U_Z$ regulated with a device according to an embodiment of the present invention.

Figure 7 shows a comparison of the power consumed by the installation and the power consumed by the installation with a device according to an embodiment of the present invention.

Figure 8 shows a diagram of a device with a bypass system in the deactivated position, according to the embodiment of the invention shown in Figure 1.

Figure 9 shows a diagram of a device with a bypass system in the activated position, according to the embodiment of the invention shown in Figure 1.

Detailed Description of the Invention

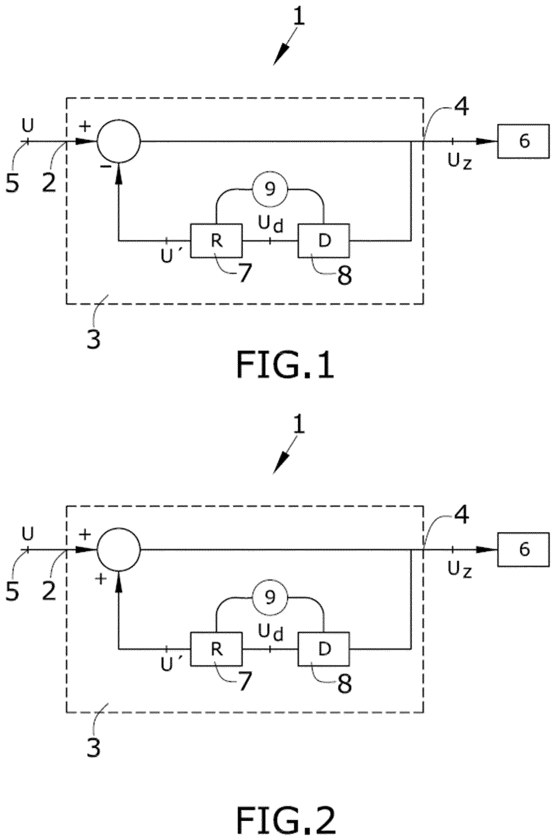

Figure 1 shows a diagram of a device according to an embodiment of the invention.

The device (1) according to the invention allows automatically determining the optimal operating point of electric loads (6) connected to the installation, i.e., the optimal supply voltage value of said electric loads (6) so that said loads are at their optimal active power consumption point.

For improving energy efficiency in an electrical installation, said device (1) comprises an inlet (2) adapted for receiving a power grid (5) supply voltage U, a regulating element (3) in turn comprising modifying means (7), selection means (8) and processing means (9).

In this particular embodiment, the modifying means (7) are an autotransformer having a set of power electronics elements associated therewith.

The selection means (8) are a transformer having a fixed transformation ratio of value R.

The processing means (9) is a control system connected to an effective voltage meter and an active power meter (elements not depicted) of the electric loads (6) connected to the installation. The voltage and power measurements are stored in temporary storage used by the processing means for evaluating the consumed active power P derivative according to the regulated load voltage $U_Z$ supplied to the loads (6) of the installation.

The regulating element (3) receives from the processing means (9) the voltage set-point required by electric loads (6) which has been analyzed by said processing means (9) together with the power consumption of each load (6), and calculates the optimal supply voltage value of each load (6) corresponding to its optimal active power consumption value.

The control system of the processing means (9) has incorporated a calculation algorithm which obtains said voltage set-point.

In this particular embodiment, the supply voltage U value is reduced according to the expression:

$$U_Z = U - U\,'$$

Active power consumption of the installation is continuously evaluated by the processing means (9). Said processing means (9) can, either continuously or else upon detecting a relevant variation in active power consumption in the installation, calculate the new voltage value for which the installation consumes the minimal amount of active power.

Said optimal voltage value is calculated using any method for obtaining ends in mathematical functions, for example, by means of Newton's method, the bisection method or by the statistical testing of results for several possible voltage values.

The device (1) independently regulates each of the phases of the electrical installation.

In a preferred example of the invention, the device (1) is installed in a three-phase electrical system.

In another particular embodiment, the device (1) is installed in a single-phase electrical system or in a multiphase electrical system.

Figure 2 shows a diagram of a device according to another embodiment of the invention.

In this particular embodiment, the elements comprised in the device (1) are the same as those in the preceding particular embodiment.

In this case, the supply voltage U value is increased according to the expression:

$$U_Z = U + U\,'$$

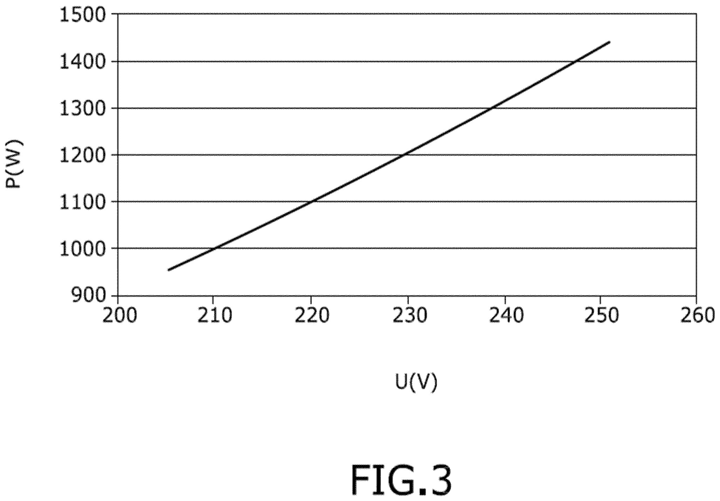

Figure 3 shows a P-U curve of an electrical installation according to a particular connection of electric loads (6). In this case, the electric loads (6) are resistive loads with a power factor close to 1.

In this case, there is greater active power consumption by the loads (6) as the supply voltage U is increased. For loads (6) of this type, which are the most common, consumed active power is minimal for a supply voltage of said loads (6) that is the lowest possible, always within the range of allowed values, i.e., above the minimum supply voltage value of the loads (6).

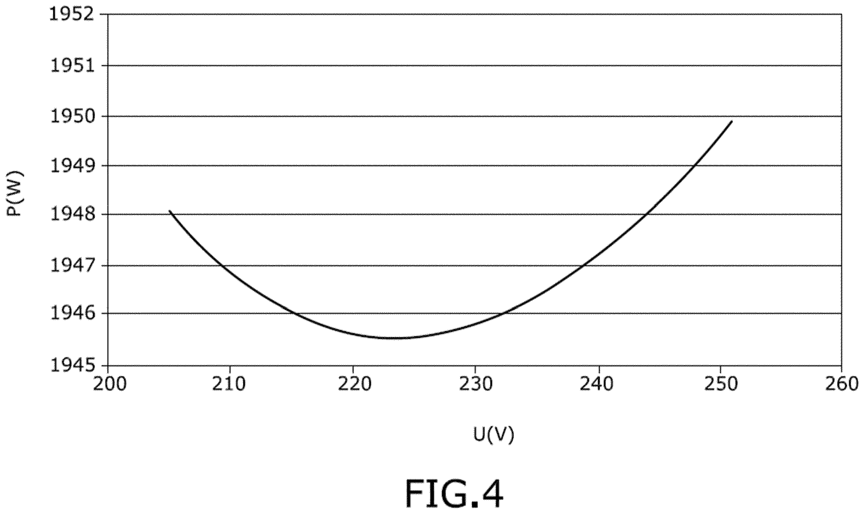

Figure 4 shows a P-U curve of an electrical installation according to a particular connection of electric loads (6), obtained by means of a combination of resistive, inductive and capacitive loads.

In this case, the minimum active power consumption P value is observed at an intermediate voltage U value point, as shown in said Figure 4.

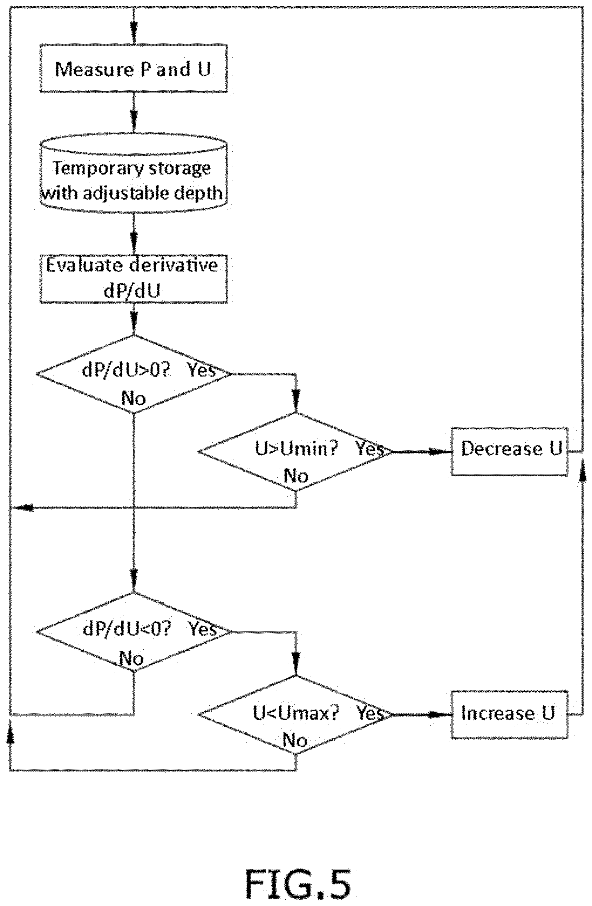

Figure 5 shows a flowchart of the operation of a device (1) and the method for regulating the supply voltage U.

The consumed power P derivative is continuously evaluated according to the voltage U supplied to the load. If this derivative is positive, i.e., power P increases with voltage U, supply voltage to the load (6) is reduced provided that the obtained optimal value is above the minimum value established by law. If the derivative is negative, i.e., power P decreases with voltage U, supply voltage to the load (6) is increased provided that the obtained optimal value is below the maximum value established by the specifications of the load (6). The process is repeated again in the new set-point voltage value.

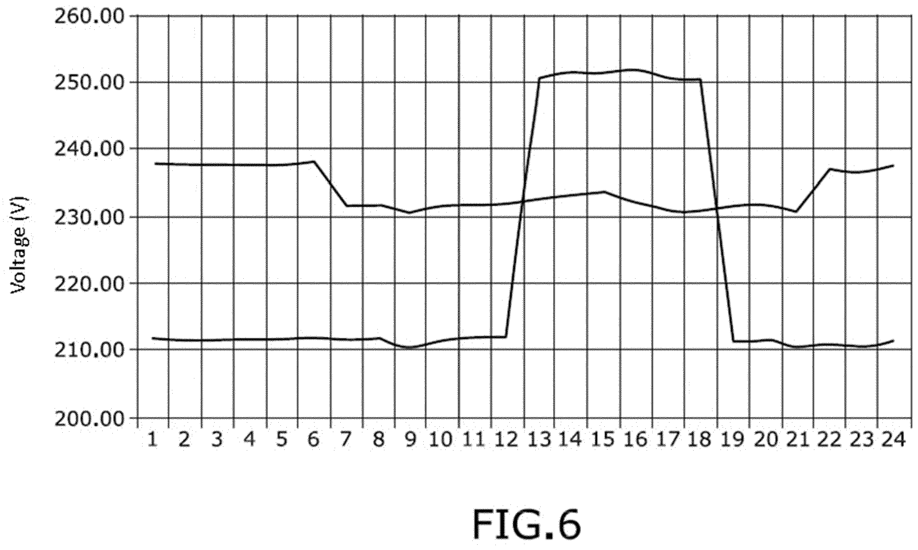

Figure 6 shows a comparison of the power grid supply voltage U that is supplied to the electric loads (6) if the device (1) is not operating or is not installed and the regulated load voltage $U_Z$ supplied to the loads (6) with a device (1) according to the invention.

The graph shows the pattern of both voltage values over 24 hours in one day in one and the same installation, with load variations in said electrical installation.

The first type of electric load is connected from midnight to 4 am and it is a load the power of which increases when the voltage fed to it increases. Additional loads of the same type but having a higher value are connected between 4 am and noon. At noon, the characteristic of the load changes and the power thereof becomes decreasing with the applied voltage. Finally, at 6 pm a load the power of which increases when the voltage fed to it increases, which is identical to those existing in the first few hours of the day, is connected again.

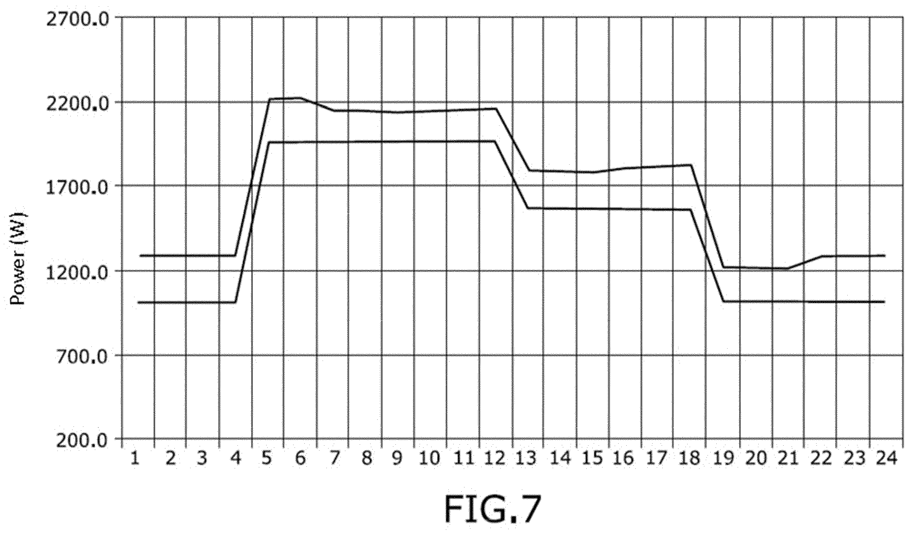

Figure 7 shows a comparison of the consumed active power of the electric loads (6) connected to the electrical installation if the device (1) is not operating or is not installed and the consumed active power of the electric loads (6) connected to the electrical installation with a device (1) according to the invention.

The graph shows the pattern of both voltage values over 24 hours in one day in one and the same installation, with load variations in said electrical installation. The load variations are the same as in the case of the preceding drawing.

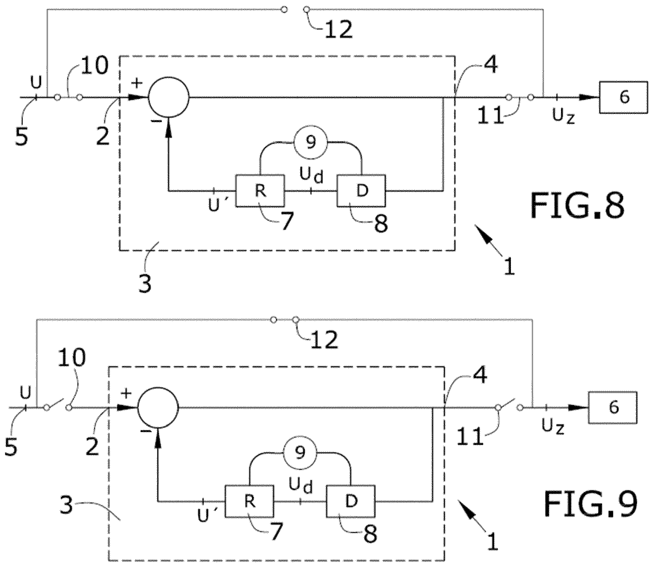

Figure 8 shows a diagram of a device (1) according to the embodiment of Figure 1.

The device (1) further comprises a bypass system formed by three switches (10, 11, 12) and a controller (not depicted) which allows managing activation of said bypass system. Said controller allows choosing between two possible positions of the bypass system, i.e., activated or deactivated. Changing from one position to another is done without the supply voltage to the electric loads having a nil value. This is achieved because during said change, overlap occurs with the three switches (10, 11, 12) closed.

In this case, the state of the bypass system is deactivated, the switch (12) being open and the two switches (10, 11) being closed. This allows the power grid (5) supply voltage U to be treated by the regulating element (3).

Figure 9 also shows a diagram of a device (1) according to the embodiment of Figure 1, in this case the state of the bypass system being activated, i.e., switch (12) is closed and the two switches (10, 11) are open.

This allows the power grid (5) supply voltage U to avoid passing through the regulating element (3), such that the load voltage $U_Z$ feeding the electric loads (6) of the installation is the actual supply voltage U.

In one embodiment, the processing means (9) act like a bypass system controller.

## Claims

1. A device (1) for improving energy efficiency in an electrical installation, comprising:

   - at least one inlet (2) adapted for receiving a power grid (5) supply voltage U,
   - at least one voltage U regulating element (3), and
   - at least one load voltage $U_Z$ supply outlet (4) for feeding at least one electric load (6) of the electrical installation,

   wherein the at least one regulating element (3) is configured for changing the voltage U value according to the optimal active power consumption value of the at least one electric load (6), obtaining a regulated load voltage $U_Z$ corresponding to the voltage level that optimizes active power consumption of the at least one electric load (6), said regulated load voltage $U_Z$ being comprised in a limit voltage range corresponding to the range of operating voltage values of said at least one electric load (6),
   wherein the voltage U regulating element (3) comprises modifying means (7) and selection means (8) for modifying and selecting the supply voltage U, wherein said selection means (8) are adapted for:

   - shunting a voltage $U_D$, corresponding to a decimal D of the regulated load voltage $U_Z$,

   $$U_D = D \cdot U_Z \ ,$$

   D E [0,1], and the modifying means (7) are adapted for:
   - changing the voltage $U_D$ value according to a factor R depending on the optimal active power consumption value of the at least one electric load (6), obtaining a modified voltage U', wherein:

   $$U' = R \cdot U_D \ ,$$

   wherein the regulating element (3) is further configured to obtain the regulated load voltage $U_Z$ being:

$$U_Z = U \mp U'$$

and wherein the voltage U regulating element (3) further comprises processing means (9) adapted for:

- determining the voltage that optimizes active power consumption of the at least one electric load (6),
- determining an evaluation of a variation in consumed active power P with respect to the regulated load voltage Uz, and
- acting on the modifying means (7) and selection means (8) and wherein the modifying means (7) are configured for changing the voltage $U_D$ value according to the evaluation such that:
- if the power P increases with respect to the regulated load voltage $U_Z$, the regulated load voltage $U_Z$ value is decreased by the modifying means (7), or
- if the power P decreases with respect to the regulated load voltage $U_Z$, the regulated load voltage $U_Z$ value is increased by the modifying means (7).

2. The device (1) according to claim 1, **characterized in that** the voltage U regulating element (3) is configured for continuously obtaining the regulated load voltage $U_Z$ value corresponding to the voltage level that optimizes active power consumption of the at least one electric load (6) during operation of the electrical installation.

3. The device (1) according to any of the preceding claims, wherein the regulated load voltage $U_Z$ value is:

$$U_Z = \frac{U}{(1 \mp DR)}$$

4. The device (1) according to any of the preceding claims, wherein the evaluation is performed by means of evaluating the derivative $\frac{dP}{dU_Z}$.

5. The device (1) according to any of the preceding claims, **characterized in that** the modifying means (7) comprise a transformer.

6. The device (1) according to any of the preceding claims, **characterized in that** the selection means (8) comprise an autotransformer with the corresponding power electronics.

7. The device (1) according to any of the preceding claims, **characterized in that** it comprises a bypass system that allows the supply voltage U to avoid being regulated by means of the at least one regulating element (3), such that the regulated load voltage $U_Z$ supplied to the at least one load (6) is the power grid (5) supply voltage U.

8. The device (1) according to any of the preceding claims, **characterized in that** the decimal D value is zero, the regulated load voltage $U_Z$ value being the power grid (5) supply voltage U value.

9. A method for regulating a supply voltage U in an electrical installation, which comprises a device (1) according to any of the preceding claims, said method comprising the following steps:

a) measuring the consumed active power P of the at least one load (6), and the regulated load voltage $U_Z$,

b) evaluating, by means of the processing means (9), the variation in consumed active power P with respect to the regulated load voltage $U_Z$,

c) regulating, by means of the regulating element (3), the supply voltage U value by decreasing the load voltage $U_Z$ value if the power P increases with respect to the regulated load voltage $U_Z$, and by increasing the load voltage $U_Z$ value if the power P decreases with respect to the regulated load voltage $U_Z$, all this such that the regulated load voltage $U_Z$ value corresponds to the voltage level that optimizes the consumed active power P value of the at least one load (6).

10. The method for regulating a supply voltage U according to claim 9, **characterized in that** step b) of evaluating the increase in consumed active power P with respect to the regulated load voltage $U_Z$ comprises:

- evaluating the derivative $\frac{dP}{dU_Z}$

and step c) of regulating comprises:

- decreasing the regulated load voltage $U_Z$ value if the value of said derivative $\frac{dP}{dU_Z}$ is greater than zero, or
- increasing the regulated load voltage $U_Z$ value if the value of said derivative $\frac{dP}{dU_Z}$ is less than zero, or
- maintaining the regulated load voltage $U_Z$ value if the value of said derivative $\frac{dP}{dU_Z}$ is equal to zero.

**Patentansprüche**

1. Vorrichtung (1) zur Verbesserung der Energieeffizienz in einer elektrischen Anlage, die aufweist:

   - wenigstens eine Zuführung (2), die geeignet ist, eine Versorgungsspannung U eines elektrischen Netzes (5) zu empfangen,
   - wenigstens ein Regelungselement (3) für die Spannung U, und
   - wenigstens einen Versorgungsausgang (4) für eine Lastspannung $U_Z$, um wenigstens eine elektrische Last (6) der elektrischen Anlage zu speisen,

   wobei das wenigstens eine Regelungselement (3) konfiguriert ist, um den Wert der Spannung U gemäß dem optimalen Wirkleistungsverbrauchswert der wenigstens einen elektrischen Last (6) zu ändern, eine geregelte Lastspannung $U_Z$, die dem Spannungspegel entspricht, der den Wirkleistungsverbrauch der wenigstens einen elektrischen Last (6) optimiert, zu erhalten, wobei die geregelte Lastspannung $U_Z$ in einem Grenzspannungsbereich enthalten ist, welcher dem Bereich der Betriebsspannungswerte der wenigstens einen elektrischen Last (6) entspricht, wobei das Regelungselement (3) für die Spannung U eine Modifizierungseinrichtung (7) und Auswahleinrichtung (8) zum Modifizieren und Auswählen der Versorgungsspannung U aufweist, wobei die Auswahleinrichtung (8) geeignet ist zum:

   - Abzweigen einer Spannung $U_D$, die einer Dezimale D der geregelten Lastspannung $U_Z$ entspricht,

   $$U_D = D \cdot U_Z,$$

   D ∈ [0,1] und die Modifizierungseinrichtung (7) geeignet ist zum:
   - Ändern des Spannungswerts $U_D$ gemäß einem Faktor R in Abhängigkeit von dem optimalen Wirkleistungsverbrauchswert der wenigstens einen elektrischen Last (6), Erhalten einer modifizierten Spannung U', wobei

   $$U' = R \cdot U_D,$$

   wobei das Regelungselement (3) ferner konfiguriert ist, um die geregelte Lastspannung $U_Z$ zu erhalten, wobei

   $$U_Z = U \mp U',$$

   und wobei das Regelungselement (3) für die Spannung U ferner eine Verarbeitungseinrichtung (9) aufweist, die geeignet ist zum:
   - Bestimmen der Spannung, welche den Wirkleistungsverbrauch der wenigstens einen elektrischen Last (6) optimiert,
   - Bestimmen einer Auswertung einer Schwankung der verbrauchten Wirkleistung P in Bezug auf die geregelte Lastspannung $U_Z$, und
   - Einwirken auf die Modifizierungseinrichtung (7) und Auswahleinrichtung (8), und wobei die Modifizierungseinrichtung (7) konfiguriert ist, um den Spannungswert $U_D$ gemäß der Auswertung derart zu ändern, dass:
   - wenn die Leistung P in Bezug auf die geregelte Lastspannung $U_Z$ zunimmt, der geregelte Wert der Lastspannung $U_Z$ durch die Modifizierungseinrichtung (7) verringert wird, oder
   - wenn die Leistung P in Bezug auf die geregelte Lastspannung $U_Z$ abnimmt, der geregelte Wert der Lastspannung $U_Z$ durch die Modifizierungseinrichtung (7) erhöht wird.

2. Vorrichtung (1) nach Anspruch 1, **dadurch gekennzeichnet, dass** das Regelungselement (3) für die Spannung U konfiguriert ist, um kontinuierlich den Wert der geregelten Lastspannung $U_Z$ zu erhalten, der dem Spannungspegel entspricht, der den Wirkleistungsverbrauch an der wenigstens einen elektrischen Last (6) während des Betriebs der elektrischen Anlage optimiert.

3. Vorrichtung (1) nach einem der vorhergehenden Ansprüche, wobei der geregelte Wert der Lastspannung $U_Z$ ist:

   $$U_Z = \frac{U}{(1 \mp DR)}$$

4. Vorrichtung (1) nach einem der vorhergehenden Ansprüche, wobei die Auswertung mittels einer Auswertung der Ableitung $\frac{dP}{dU_Z}$ durchgeführt wird.

5. Vorrichtung (1) nach einem der vorhergehenden Ansprüche, **dadurch gekennzeichnet, dass** die Modifizierungseinrichtung (7) einen Transformator aufweist.

6. Vorrichtung (1) nach einem der vorhergehenden Ansprüche, **dadurch gekennzeichnet, dass** die Auswahleinrichtung (8) einen Autotransformator mit der entsprechenden Leistungselektronik aufweist.

7. Vorrichtung (1) nach einem der vorhergehenden Ansprüche, **dadurch gekennzeichnet, dass** sie ein Umleitungssystem aufweist, das zulässt, dass die Versorgungsspannung U es vermeidet, mittels des wenigstens einen Regelungselements (3) geregelt zu werden, so dass die geregelte Lastspannung U$_Z$, die an die wenigstens eine Last (6) zugeführt wird, die Versorgungsspannung U des elektrischen Netzes (5) ist.

8. Vorrichtung (1) nach einem der vorhergehenden Ansprüche, **dadurch gekennzeichnet, dass** der Wert der Dezimale D Null ist, wobei der Wert der geregelten Lastspannung U$_Z$ der Wert der Versorgungsspannung U des elektrischen Netzes (5) ist.

9. Verfahren zur Regelung einer Versorgungsspannung U in einer elektrischen Anlage, die eine Vorrichtung (1) nach einem der vorhergehenden Ansprüche aufweist, wobei das Verfahren die folgenden Schritte aufweist:

   a) Messen der verbrauchten Wirkleistung P der wenigstens einen Last (6) und der geregelten Lastspannung U$_Z$,
   b) Auswerten der Änderung der verbrauchten Wirkleistung P in Bezug auf die geregelte Lastspannung U$_Z$ mittels der Verarbeitungseinrichtung (9),
   c) Regeln des Werts der der Versorgungsspannung mittels des Regelungselements (3) durch Verringern des Werts der Lastspannung U$_Z$, wenn die Leistung P in Bezug auf die geregelte Lastspannung U$_Z$ zunimmt, und durch Erhöhen des Werts der Lastspannung U$_Z$, wenn die Leistung P in Bezug auf die geregelte Lastspannung U$_Z$ abnimmt, wobei all dies derart erfolgt, dass der Wert der geregelten Lastspannung U$_Z$ dem Spannungspegel entspricht, der den Wert der verbrauchten Wirkleistung P der wenigstens einen Last (6) optimiert.

10. Verfahren zur Regelung einer Versorgungsspannung U nach Anspruch 9, **dadurch gekennzeichnet, dass** der Schritt b) des Auswertens der Zunahme der verbrauchten Wirkleistung P in Bezug auf die geregelte Lastspannung U$_Z$ aufweist:

   - Auswerten der Ableitung $\frac{dP}{dU_Z}$,

   und der Schritt c) der Regelung aufweist:

   - Verringern des Werts der geregelten Lastspannung U$_Z$, wenn der Wert der Ableitung $\frac{dP}{dU_Z}$ größer als Null ist, oder

   - Erhöhen des Werts der geregelten Lastspannung U$_Z$, wenn der Wert der Ableitung $\frac{dP}{dU_Z}$ kleiner als Null ist, oder

- Aufrechterhalten des Werts der geregelten Lastspannung U$_Z$, wenn der Wert der Ableitung $\frac{dP}{dU_Z}$ gleich Null ist.

## Revendications

1. Un dispositif (1) pour améliorer l'efficacité énergétique dans une installation électrique, comprenant :

   - au moins une entrée (2) adaptée pour recevoir une tension U d'alimentation de réseau électrique (5),
   - au moins un élément (3) de régulation de tension U, et
   - au moins une sortie (4) d'alimentation en une tension de charge Uz pour alimenter au moins une charge électrique (6) de l'installation électrique,

ledit au moins un élément de régulation (3) étant configuré pour changer la valeur de tension U en fonction de la valeur optimale de consommation d'énergie active de ladite au moins une charge électrique (6), obtenant une tension de charge Uz régulée correspondant au niveau de tension qui optimise la consommation de puissance active de ladite au moins une charge électrique (6), ladite tension de charge régulée Uz étant comprise dans une gamme de tensions limites correspondant à la gamme de valeurs de tension de fonctionnement de ladite au moins une charge électrique (6),
l'élément (3) de régulation de tension U comprenant des moyens de modification (7) et des moyens de sélection (8) pour modifier et sélectionner la tension d'alimentation U,
lesdits moyens de sélection (8) étant adaptés pour :

   - dériver une tension U$_D$, correspondant à une décimale D de la tension de charge *Uz* régulée,

$$U_D = D \cdot U_Z \quad ,$$

$$D \in [0,1] , \quad , \text{et}$$

   les moyens de modification (7) étant adaptés pour :
   - modifier la valeur de tension U$_D$ selon un facteur R en fonction de la valeur optimale de consommation d'énergie active de ladite au moins une charge électrique (6), obtenant une tension modifiée U', dans laquelle :

$$U' = R \cdot U_D ,$$

l'élément de régulation (3) étant en outre configuré pour obtenir la tension de charge régulée *Uz*, étant :

$$U_z = U \mp U'$$

et l'élément (3) de régulation de tension U comprenant en outre des moyens de traitement (9) adaptés pour :
- déterminer la tension qui optimise la consommation d'énergie active de ladite au moins une charge électrique (6),
- déterminer une évaluation d'une variation de la puissance active consommée P par rapport à la tension de charge *Uz* régulée, et
- agir sur les moyens de modification (7) et les moyens de sélection (8) et les moyens de modification (7) étant configurés pour changer la valeur de tension $U_D$ selon l'évaluation de façon que :
- si la puissance P augmente par rapport à la tension de charge *Uz* régulée, la valeur de la tension de charge *Uz* régulée est diminuée par les moyens de modification (7), ou
- si la puissance P diminue par rapport à la tension de charge *Uz* régulée, la valeur de la tension de charge *Uz* régulée est augmentée par les moyens de modification (7).

2. Le dispositif (1) selon la revendication 1, **caractérisé en ce que** l'élément (3) de régulation de tension U est configuré pour obtenir en continu la valeur de tension de charge *Uz* régulée correspondant au niveau de tension qui optimise la consommation de puissance active de ladite au moins un charge électrique (6) pendant le fonctionnement de l'installation électrique.

3. Le dispositif (1) selon l'une quelconque des revendications précédentes, dans lequel la valeur de tension de charge *Uz* régulée est :

$$U_z = \frac{U}{(1 \mp DR)}$$

4. Le dispositif (1) selon l'une quelconque des revendications précédentes, dans lequel l'évaluation est effectuée au moyen de l'évaluation de la dérivée

$$\frac{dP}{dUz}.$$

5. Le dispositif (1) selon l'une quelconque des revendications précédentes, **caractérisé en ce que** les moyens de modification (7) comprennent un transformateur.

6. Le dispositif (1) selon l'une quelconque des revendications précédentes, **caractérisé en ce que** les moyens de sélection (8) comprennent un autotransformateur avec l'électronique de puissance correspondante.

7. Le dispositif (1) selon l'une quelconque des revendications précédentes, **caractérisé en ce qu'**il comprend un système de dérivation qui permet à la tension d'alimentation U d'éviter d'être régulée au moyen dudit au moins un élément de régulation (3), de sorte que la tension de charge *Uz* régulée fournie à ladite au moins une charge (6) est la tension d'alimentation U de réseau électrique (5).

8. Le dispositif (1) selon l'une quelconque des revendications précédentes, **caractérisé en ce que** la valeur décimale D est nulle, la valeur de la tension de charge *Uz* régulée étant la valeur de tension d'alimentation U de réseau électrique (5).

9. Un procédé pour réguler une tension d'alimentation U dans une installation électrique, qui comprend un dispositif (1) selon l'une quelconque des revendications précédentes, ledit procédé comprenant les étapes suivantes :

a) mesurer la puissance active consommée P de ladite au moins une charge (6) et la tension de charge $U_Z$ régulée,
b) évaluer, au moyen des moyens de traitement (9), la variation de la puissance active consommée P par rapport à la tension de charge $U_Z$ régulée,
c) réguler, au moyen de l'élément de régulation (3), la valeur de tension d'alimentation U en diminuant la valeur de tension de charge $U_Z$ si la puissance P augmente par rapport à la tension de charge $U_Z$ régulée et en augmentant la tension de charge *Uz* si la puissance P diminue par rapport à la tension de charge *Uz* régulée, tout ceci de telle sorte que la valeur de tension de charge $U_Z$ régulée corresponde au niveau de tension qui optimise la valeur de puissance active consommée P de ladite au moins une charge (6).

10. Le procédé pour réguler une tension d'alimentation U selon la revendication 9, **caractérisé en ce que** l'étape b) d'évaluation de l'augmentation de la puissance active consommée P par rapport à la tension de charge $U_Z$ régulée comprend :

- le fait d'évaluer la dérivée $\dfrac{dP}{dUz}$

et l'étape c) de la régulation comprend :

- le fait de diminuer la valeur de tension de charge $U_Z$ régulée si la valeur de ladite dérivée $\dfrac{dP}{dUz}$ est supérieure à zéro, ou
- le fait d'augmenter la valeur de tension de charge $Uz$ régulée si la valeur de ladite dérivée $\dfrac{dP}{dUz}$ est inférieure à zéro, ou
- le fait de maintenir la valeur de tension de charge $Uz$ régulée si la valeur de ladite dérivée $\dfrac{dP}{dUz}$ est égale à zéro.

FIG.1

FIG.2

FIG.3

FIG.4

FIG.5

FIG.6

FIG.7

FIG.8

FIG.9

EP 3 059 829 B1

**REFERENCES CITED IN THE DESCRIPTION**

**Patent documents cited in the description**

- JP 2005292948 A
- US 2003187550 A1
- US 2010085004 A1
- US 2010327961 A1